# EUROPEAN PATENT APPLICATION

(11) **EP 2 487 228 A1**
(43) Date of publication of application: **15.08.2012**
(21) Application number: 10822001.3
(22) Date of filing: 05.10.2010
(51) Int. Cl.: C10M 169/06, C10M 101/02, C10M 117/00, C10M 129/40, C10M 135/18, F16D 3/20, F16D 3/205, F16D 3/224, F16D 3/227, C10N 10/02, C10N 10/04, C10N 10/12, C10N 30/06, C10N 40/04, C10N 50/10

(54) **GREASE COMPOSITION AND CONSTANT-VELOCITY JOINT**

(30) Priority: 05.10.2009 JP 2009231656
(71) Applicant: Kyodo Yushi Co., Ltd., Kanagawa 251-8588 (JP); NTN Corporation, Osaka-shi, Osaka 550-0003 (JP)
(72) Inventor: KAKIZAKI Mitsuhiro, Fujisawa-shi Kanagawa 251-8588 (JP); NAGUMO Daigo, Fujisawa-shi Kanagawa 251-8588 (JP); YOSHIHARA Michitaka, Fujisawa-shi Kanagawa 251-8588 (JP); TAKABE Shinichi, Iwata-shi Shizuoka 438-8510 (JP)
(74) Representative: Vossius & Partner
(86) International application number: PCT/JP2010/067442
(87) International publication number: WO 2011/043331

(57) **Abstract**

The invention provides a grease composition containing (a) a base oil, (b) a lithium soap based thickener, (c) at least one stearic acid metallic salt selected from the group consisting of Ca stearate, Mg stearate and Zn stearate, (d) molybdenum dialkyl dithiocarbamate sulfide, and (e) zinc dialkyl dithiocarbamate sulfide. The present invention also provides a constant velocity joint such as a Barfield constant velocity joint (BJ), double offset constant velocity joint (DOJ), tripod constant velocity joint (TJ) or the like, containing the above-mentioned grease composition therein. The grease composition of the invention is excellent in antiwear properties and suitable for the constant velocity joint.

## Description

### [Technical Field]

The present invention relates to a grease composition with excellent antiwear properties and a constant velocity joint where the above-mentioned grease composition is packed.

### [Background Art]

In the constant velocity joint used in the automobile, complicated relative motions take place, which involve rolling and sliding movements between the parts, so that loss of energy, vibrations, noise, and heat may be generated. For reducing or preventing the above-mentioned problems, it is desired to use a grease having excellent antiwear properties.

Conventionally, a lubricating grease comprising a calcium soap as a thickener; and a lubricating grease comprising a lithium soap as a thickener and a sulfur-phosphorus containing extreme pressure agent, for example, selected from the group consisting of sulfurized fats and oils, tricresyl phosphate, and zinc dithiophosphate are used for the above-mentioned application (as in Japanese Society of Tribologists, Grease Technical Committee ed., Junkatsu Grease No Kiso To Ouyou (Fundamentals and Applications of Lubricating Grease). Yokendo Co., Ltd., (2007): pp. 77 and 162).

To cope with a recent demand for further improvement in the antiwear properties of grease, the grease comprising a particular urea compound as the thickener, molybdenum disulfide, molybdenum dialkyl dithiocarbamate, and a particular sulfur-containing extreme pressure agent was used (for example, as in JP 10-273692 A).

The need for improved antiwear properties to prevent the occurrence of flaking has become more pressing recent years. In light of the above, the grease comprising a particular urea compound as the thickener, molybdenum disulfide, molybdenum dialkyl dithiocarbamate, melamine cyanurate, calcium sulfonate, and a particular sulfur-containing extreme pressure agent was used (for example, as in JP 2006-96949 A). Those grease compositions, however, show insufficient antiwear properties. In addition, due to a recent rise in the price of molybdenum, the greases employing molybdenum disulfide become more expensive and lacking of versatility.

### [Summary of Invention]

### [Technical Problem]

An object of the invention is to provide a grease composition having excellent antiwear properties and being suitable for constant velocity joints; and a constant velocity joint, in particular, Barfield constant velocity joints (BJ), double offset constant velocity joint (DOJ) and tripod constant velocity joint (TJ), charged with the above-mentioned grease composition.

### [Solution to Problem]

The invention provides a grease composition and a constant velocity joint as shown below.
1. A grease composition comprising the following components:
   (a) a base oil,
   (b) a lithium soap based thickener,
   (c) at least one stearic acid metallic salt selected from the group consisting of Ca stearate, Mg stearate and Zn stearate,
   (d) molybdenum dialkyl dithiocarbamate sulfide, and
   (e) zinc dialkyl dithiocarbamate sulfide.
2. The grease composition described in the above-mentioned item 1, wherein the component (c) is contained in an amount of 0.1 to 5 mass%.
3. The grease composition described in the above-mentioned item 2, wherein the component (d) is contained in an amount of 0.1 to 5 mass% and the component (e) is contained in an amount of 0.1 to 5 mass%.
4. The grease composition described in any one of the above-mentioned item 1 to 3, designed for a constant velocity joint.
5. A constant velocity joint where the grease composition described in any one of the above-mentioned item 1 to 4 is packed.
6. The constant velocity joint (Barfield constant velocity joint (BJ)) described in the above-mentioned item 5, comprising an outer joint member where a plurality of track grooves are formed on an internal spherical surface; an inner joint member disposed within the outer joint member, where a plurality of track grooves corresponding to the track grooves of the outer joint member are formed on an external spherical surface; balls as the rolling elements placed between the track grooves of the outer joint member and the track grooves of the inner joint member; and a cage placed to hold the balls between the outer joint member and the inner joint member.
7. The constant velocity joint (double offset constant velocity joint (DOJ)) described in the above-mentioned item 5, comprising an outer joint member where a plurality of linear track grooves extending in a direction of a shaft are formed on an internal cylindrical surface; an inner joint member disposed within the outer joint member, where a plurality of linear track grooves corresponding to the track grooves of the outer joint member are formed on an external spherical surface; balls as the rolling elements placed between the track grooves of the outer joint member and the track grooves of the inner joint member; and a cage placed to hold the balls between the outer joint member and the inner joint member.
8. The constant velocity joint (tripod constant velocity joint (TJ)) described in the above-mentioned item 5, comprising an outer joint member where three linear track grooves extending in a direction of a shaft are formed on an internal surface; an inner joint member consisting of a tripod member having three legs protruding in a direction of the radius; and rollers as the rolling elements which are rotatably supported by the legs and capable of being inserted into the track grooves of the outer joint member and guided therethrough with freely rolling.

### [Effects of Invention]

The grease composition of the invention is excellent in the antiwear properties, so that the mechanical parts can be efficiently lubricated and the energy loss and vibration can be prevented from occurring by effective reduction of the wear.

The grease composition of the invention is suitable for the constant velocity joint, especially for the Barfield constant velocity joint (BJ), double offset constant velocity joint (DOJ), and tripod constant velocity joint (TJ).

### [Description of Embodiments]

The inventors of the invention have conducted extensive research and development to obtain a grease composition capable of showing excellent antiwear properties when used for the constant velocity joints. The grease performance was evaluated under various lubricating conditions; using a Schwingung Reibung und Verschleiss (SRV) tester capable of determining the antiwear properties (in terms of the diameter and the appearance of wear scar) under sliding conditions, a four-ball test for determining the load carrying capacity of grease under sliding conditions, and a durability test on the practical constant velocity joints, to assess the lubricating properties resulting from the combinations of various additives.

Consequently, the inventors of the invention found that desirable lubricating characteristics can be obtained by using in combination with (a) a base oil, (b) a lithium soap thickener, (c) Ca, Mg or Zn salt of stearic acid, (d) molybdenum dialkyl dithiocarbamate sulfide, and (e) zinc dialkyl dithiocarbamate sulfide.

As the base oil (a) used in the invention, commonly used lubricating oils such as mineral oils, ether-based synthetic oils, hydrocarbon synthetic oils and the like, or mixtures thereof are used, but not limited thereto.

As the lithium soap thickener (b) in the invention, soaps prepared from a fatty acid or hydroxy fatty acid having 6 to 24 carbon atoms, preferably 12 to 20 carbon atoms, and an alkaline compound such as lithium hydroxide, lithium carbonate or the like are used.

In particular, lithium 12-hydroxystearate and lithium stearate are preferable. Those are considered to be practical because of excellent heat resistance, minimum drawbacks, and low cost.

The lithium soap as the component (b) may be used in such an amount that the required consistency can be obtained. Generally, the amount of lithium soap may preferably be in the range of 2 to 20 mass%, more preferably 5 to 15 mass%, with respect to the total mass of grease composition. When the content of lithium soap exceeds 25 mass%, the resultant grease composition may become too hard to obtain the desired effects.

The consistency of the grease composition for the constant velocity joint according to the invention may preferably be in the range of 300 to 385, more preferably 310 to 340 when determined in accordance with JIS K 2250 5.3. When the consistency is 300 or less, the grease may become too hard to readily and sufficiently exist in the lubrication part of the joint, thereby accelerating the wear. The grease with a consistency of more than 385 is so soft that leakage of the grease will make the assembling operation difficult when the joint is assembled. The consistency can be easily controlled by adjusting the amount of the above-mentioned component (b).

The component (c) used in the invention, i.e., Ca, Mg or Zn stearate, is a salt obtainable from stearic acid and an alkaline compound of Ca, Mg or Zn, for example, a hydroxide or carbonate thereof.

The amount of the component (c) may preferably be in the range of 0.01 to 10 mass%, more preferably 0.1 to 5 mass%, with respect to the total mass of the grease composition.

For the molybdenum dialkyl dithiocarbamate sulfide as the component (d) and the zinc dialkyl dithiocarbamate sulfide as the component (e), the friction modifier and the antioxidant used as the additives for petroleum products are available, respectively.

The molybdenum dialkyl dithiocarbamate sulfide as the component (d) may preferably be represented by the following general formula (1):

[R³₂N-CS-S]₂-Mo₂OₘSₙ (1)

(wherein R³ is a primary or secondary alkyl group having 1 to 24 carbon atoms, preferably 3 to 18 carbon atoms; and m is 0 to 3 and n is 1 to 4 provided that m + n = 4.)

The zinc dialkyl dithiocarbamate sulfide as the component (e) may preferably be represented by the following general formula (2):

[R⁴₂N-CS-S]₂-Zn (2)

(wherein R⁴ is a primary or secondary alkyl group having 1 to 24 carbon atoms or an aryl group having 6 to 30 carbon atoms, and particularly preferably is a primary or secondary alkyl group having 3 to 8 carbon atoms.) The content of each component (d) or (e) may preferably be in the range of 0.01 to 10 mass%, more preferably 0.1 to 5 mass%, with respect to the total mass of the grease composition.

The grease composition of the invention may further comprise an antioxidant, a rust inhibitor, a corrosion inhibitor and the like, in addition to the above-mentioned components.

Each of the above auxiliary components may preferably be contained in an amount of 0.1 to 10 mass%, more preferably 0.5 to 5 mass%, with respect to the total mass of the grease composition.

The grease composition of the invention is suitable for the constant velocity joint, in particular, the Barfield constant velocity joint (BJ), double offset constant velocity joint (DOJ), and tripod constant velocity joint (TJ).

From the structural viewpoint, the Barfield constant velocity joint is characterized by comprising an outer joint member where a plurality of track grooves are formed on an internal spherical surface; an inner joint member disposed within the outer joint member, where a plurality of track grooves corresponding to the track grooves of the outer joint member are formed on an external spherical surface; balls as the rolling elements placed between the track grooves of the outer joint member and the track grooves of the inner joint member; and a cage placed to hold the balls between the outer joint member and the inner joint member. It is desirable that the rolling elements be composed of three to eight balls. The undercut free constant velocity joint is included in the group of Barfield constant velocity joint herein used.

The double offset constant velocity joint (DOJ)) has a structural feature in that the joint is provided with an outer joint member where a plurality of linear track grooves extending in the direction of a shaft are formed on an internal cylindrical surface; an inner joint member disposed within the outer joint member, where a plurality of linear track grooves corresponding to the track grooves of the outer joint member are formed on an external spherical surface; balls as the rolling elements placed between the track grooves of the outer joint member and the track grooves of the inner joint member; and a cage placed to hold the balls between the outer joint member and the inner joint member. It is desirable that the rolling elements be composed of three to eight balls.

The tripod constant velocity joint (TJ) has a structural feature in that the joint is provided with an outer joint member where three linear track grooves extending in a direction of a shaft are formed on an internal surface; an inner joint member consisting of a tripod member having three legs protruding in a direction of the radius; and rollers as the rolling elements which are rotatably supported by the legs and capable of being inserted into the track grooves of the outer joint member and guided therethrough with freely rolling.

### [Examples]

The invention will now be explained by referring to the following examples and comparative examples.

### [Examples 1 to 3 and Comparative Examples 1 to 5]

To a base grease comprising a thickener and a base oil, the additives were added to have the respective concentrations as shown in Tables 1 and 2. Then, by appropriately adding the base oil, the consistency was adjusted to have a grade No. 1 (i.e., a consistency within a range from 310 to 340 as determined by JIS K 2220 5.3) using a three-roll mill.

Lithium 12-hydroxystearate was used as the lithium soap thickener, and a reaction product of cyclohexylamine (1.4 moles), aniline (0.6 moles) and 4,4'-diphenylmethane diisocyanate (1 mole) was used as the urea-based thickener. The lithium soap thickener and the urea-based thickener were respectively used in an amount of 10 mass% and 15 mass%, based on the total mass of the grease composition.

In all the above-mentioned Examples and Comparative Examples, a mineral oil having the following characteristics was used as the base oil of grease.

| | |
|---|---|
| Viscosity | 40°C: 100 mm²/s |
| | 100°C: 10.5 mm²/s |
| Viscosity Index | 97 |

The physical properties of those grease compositions were evaluated using the test methods shown below. The obtained results are also shown in Tables.

### <SRV test>

Each of the grease compositions according to the following Examples 1 to 3 and Comparative Examples 1 to 5 was subjected to the SRV friction and wear test. The size and the appearance of wear scar on the ball were examined to evaluate the antiwear properties.

### Test conditions

| | |
|---|---|
| Test pieces | ball: 10 mm (dia.) (SUJ-2) |
| | plate: 24 mm (dia.) x 7.85 mm (SUJ-2) |

### Evaluation conditions

Load: 200 N
Frequency: 50 Hz
Stroke amplitude: 1 mm
Temperature: 80°C
Duration: 2 hours

### Measuring items: diameter and appearance of wear scar on the ball

The evaluation criteria on the appearance of wear scar are as follows:
o: There was no roughened surface on the wear scar.
x: Roughened surface was observed on the wear scar.

### <Four-ball test for determining the load carrying capacity>

In accordance with ASTM D 2596, the load where welding of the test balls occurred was determined (in terms of weld point). The loads used in this test were 784, 981,1589, 1961 and 2451 N.

It is desirable from the practical viewpoint that the load where the test balls weld in the four-ball test for determining the load carrying capacity be 2451 N or more.

### <Durability test>

Each grease composition was packed in a Barfield constant velocity joint (BJ), a double offset constant velocity joint (DOJ) and a tripod constant velocity joint (TJ) to conduct the joint durability test under the following conditions and evaluate the durability by the time elapsing before the problem occurred.

### Measuring conditions

Number of revolutions: 200 rpm
Torque: 1000 Nm
Angle: 5 deg.

### Evaluation method and criteria

The time elapsing before each part of the joint (i.e., outer joint member, inner joint member or trunnion, cage, balls or rollers) caused the problem (flaking or abnormal wear) was determined.
o: No problem occurred within a predetermined time duration.
x: Any problem occurred within a predetermined time duration.

**[Table 1]**

| Examples | 1 | 2 | 3 |
|---|---|---|---|
| Base oil | 86 | 86 | 86 |
| Lithium soap | 10 | 10 | 10 |
| Urea compound | | | |
| Ca stearate (powder) | 2 | | |
| Zn stearate (powder) | | 2 | |
| Mg stearate (powder) | | | 2 |
| MoDTC^{*1} | 1 | 1 | 1 |
| ZnDTC^{*2} | 1 | 1 | 1 |
| Diameter of SRV wear scar (mm) | 0.58 | 0.60 | 0.58 |
| Appearance of SRV wear scar (Judgment) | o | o | o |
| Four-ball test for load carrying capacity: Weld point (N) | 2451 | 2451 | 2451 |
| Durability test A^{*3} (Judgment) | o | o | o |
| Durability test B^{*4} (Judgment) | o | o | o |
| Durability test C^{*5} (Judgment) | o | o | o |

**[Table 2]**

| Comparative Examples | 1 | 2 | 3 | 4 | 5 |
|---|---|---|---|---|---|
| Base oil | 90 | 88 | 87 | 87 | 81 |
| Lithium soap | 10 | 10 | 10 | 10 | |
| Urea compound | | | | | 15 |
| Ca stearate (powder) | | | 2 | 2 | 2 |
| Zn stearate (powder) | | | | | |
| Mg stearate (powder) | | | | | |
| MoDTC^{*1} | | 1 | 1 | | 1 |
| ZnDTC^{*2} | | 1 | | 1 | 1 |
| Diameter of SRV wear scar (mm) | seizing | 0.75 | 0.72 | 0.70 | 0.66 |
| Appearance of SRV wear scar (Judgment) | seizing | x | x | x | x |
| Four-ball test for load carrying capacity: Weld point (N) | less than 784 | 981 | 1961 | 1961 | 1961 |
| Durability test A^{*3} (Judgment) | x | x | x | x | x |
| Durability test B^{*4} (Judgment) | x | x | x | x | x |
| Durability test C^{*5} (Judgment) | x | x | x | x | x |

| | | | | | |
|---|---|---|---|---|---|
| *1) molybdenum dialkyl dithiocarbamate sulfide *2) zinc dialkyl dithiocarbamate sulfide. *3) durability test using a Barfield constant velocity joint (BJ) *4) durability test using a double offset constant velocity joint (DOJ) *5) durability test using a tripod constant velocity joint (TJ) | | | | | |

When the grease compositions of Examples 1 to 3 comprising the components (a) to (e) according to the invention were used, every wear scar on the balls in the SRV test was small and no roughened surface was observed on the scar of the balls. In addition, the weld point obtained in the four-ball test for determining the load carrying capacity was 2451 N, and any problem was not recognized within the predetermined time duration in the durability test.

In contrast to the above, when using the grease composition of Comparative Example 1 which was the same as that of Example 1 except that the additive components (c) to (e) were not added, seizing took place during the SRV test. The weld point was less than 2451 N in the four-ball test for determining the load carrying capacity, and some problem was recognized within the predetermined time duration in the durability test.

When using the grease composition of Comparative Example 2 which was the same as that of Example 1 except that the stearate (c) was not added, the wear scar on the ball was large and a roughened surface was observed on the scar of the ball in the SRV test. The weld point was less than 2451 N in the four-ball test for determining the load carrying capacity, and some problem was recognized within the predetermined time duration in the durability test.

When using the grease compositions of Comparative Examples 3 and 4 which were the same as that of Example 1 except that ZnDTC and MoDTC were respectively eliminated, the wear scar on the ball was large and a roughened surface was observed on the wear scar of the ball in the SRV test. The weld point was less than 2451 N in the four-ball test for determining the load carrying capacity, and some problem was recognized within the predetermined time duration in the durability test.

When using the grease composition of Comparative Example 5 which was the same as that of Example 1 except that the lithium salt was replaced by the urea compound as the thickener, the wear scar on the ball was large and a roughened surface was observed on the wear scar of the ball in the SRV test. The weld point was less than 2451 N in the four-ball test for determining the load carrying capacity, and some problem was recognized within the predetermined time duration in the durability test.

The above-mentioned test results clearly demonstrate that the effects of the invention, specifically by the combination of the components (c) to (e) are particularly significant. Namely, when the Li-based thickener, Ca, Mg or Zn stearate, MoDTC, and ZnDTC are used in combination, it is found that a grease composition with excellent antiwear properties and excellent durability while in practical use can be obtained.

## Claims

1. A grease composition comprising;
(a) a base oil,
(b) a lithium soap based thickener,
(c) at least one stearic acid metallic salt selected from the group consisting of Ca stearate, Mg stearate and Zn stearate,
(d) molybdenum dialkyl dithiocarbamate sulfide, and
(e) zinc dialkyl dithiocarbamate sulfide.

2. The grease composition of claim 1, wherein the component (c) is contained in an amount of 0.1 to 5 mass%.

3. The grease composition of claim 1 or 2, wherein the component (d) is contained in an amount of 0.1 to 5 mass% and the component (e) is contained in an amount of 0.1 to 5 mass%.

4. The grease composition of any one of claims 1 to 3, which is used for a constant velocity joint.

5. A constant velocity joint where the grease composition of any one of claims 1 to 4 is packed.

6. The constant velocity joint of claim 5, comprising an outer joint member where a plurality of track grooves are formed on an internal spherical surface; an inner joint member disposed within the outer joint member, where a plurality of track grooves corresponding to the track grooves of the outer joint member are formed on an external spherical surface; balls as the rolling elements placed between the track grooves of the outer joint member and the track grooves of the inner joint member; and a cage placed to hold the balls between the outer joint member and the inner joint member.

7. The constant velocity joint of claim 5, comprising an outer joint member where a plurality of linear track grooves extending in a direction of a shaft are formed on an internal cylindrical surface; an inner joint member disposed within the outer joint member, where a plurality of linear track grooves corresponding to the track grooves of the outer joint member are formed on an external spherical surface; balls as the rolling elements placed between the track grooves of the outer joint member and the track grooves of the inner joint member; and a cage placed to hold the balls between the outer joint member and the inner joint member.

8. The constant velocity joint of claim 5, comprising an outer joint member where three linear track grooves extending in a direction of a shaft are formed on an internal surface; an inner joint member consisting of a tripod member having three legs protruding in a direction of the radius; and rollers as the rolling elements which are rotatably supported by the legs, and capable of being inserted into the track grooves of the outer joint member and guided through the track grooves with freely rolling.
